# EUROPEAN PATENT APPLICATION

(11) **EP 1 384 520 A2**
(43) Date of publication of application: **28.01.2004**
(21) Application number: 03380154.9
(22) Date of filing: 25.06.2003
(51) Int. Cl.: B05D 1/00, C03C 17/02, C03C 17/34

(54) **Manufacturing method for a slip-proof glass plate which can be stepped upon and the plate obtained thereby**

(30) Priority: 22.07.2002 ES 200201714
(71) Applicant: Cristales Curvados, S.A. (Cricursa), 08400 Granollers (Barcelona) (ES)
(72) Inventor: Figuerola Gili, Fernando, 08400 Granollers, Barcelona (ES)
(74) Representative: Esteban Perez-Serrano, Maria Isabel

(57) **Abstract**

The present invention relates to a manufacturing method for a steppable, slip-proof glass plate, characterised by the use of a base consisting of a glass plate (2) on which is incorporated by silk marking a vitrifiable enamel that can retain particles (3) of an abrasive material, which specifically may be glass particles, that after a drying, vitrification and tempering constitute a slip-proof surface. The plate thus obtained can be used in greater volumes for a higher strength.

## Description

### OBJECT OF THE INVENTION

The present invention relates to a method for manufacturing a slip-proof steppable glass plate and to the plate obtained thereby.

This method is characterised by a base consisting of a glass plate on which is incorporated a vitrified enamel by silk marking that can retain particles of an abrasive material, which specifically can also be glass particles, to form a given pattern.

It is characterised by the application of a drying process and a later vitrification process that allows the subsequent tempering of the glass plate.

Also an object of the invention is the glass plate with the abrasive surface obtained by the manufacturing method.

### BACKGROUND OF THE INVENTION

Several methods are known for obtaining a slip-proof surface. From a mechanical point of view, adherence is obtained when the surface has a high roughness and the roughness crests are hard enough to withstand the high local pressures arising during the support.

Knurled machining is a clear example of obtaining rough surfaces that improve adherence. In addition, as the machined material is a metal the hardness is guaranteed in most cases.

Use of abrasives is simply a way of using materials of great hardness that can withstand high local stresses and wear due to friction, preferably presented as faceted particles or particles as different as possible from a blunt surface, in order to improve the adherence by contact.

Several Patent documents are known that describe methods for applying abrasives to surfaces in order to obtain a high degree of adherence.

Spanish Patent with publication number ES2124192 relates to a method for manufacturing paint and recovery glass composites and to their application as slip-proof ground signals in transited areas.

The invention described by this patent consists of using a special quick-drying outdoor paint with a diverse pigmentation to which ground glass is added by a mixing method, with a suitable grain size of up to 5 mm that determines its slip-proof properties.

This patent has been improved with the improvements disclosed in the addition patent with publication number ES2130097.

The improvements relate to the ground glass incorporated to the paint in which several grain sizes of different orders of magnitude are incorporated, such as an amount of glass with a grain size between 0.01 mm and 1 mm and another amount with a grain size between 1 mm and 8 mm combined with others in different amounts as well as weight ratios between the quick-drying paint and additional solvents, with advantageous results.

Another way to obtain slip-proof surfaces is that disclosed in Patent WO9112090, which describes a slip-proof road surface formed by a distribution of aluminium oxide particles on a first layer of paint with epoxy resin containing chlorinated rubber.

While this paint is still wet, a second layer of paint is spread over the first layer to enclose the particles.

In addition, the surface can be made reflective by distributing glass droplets on the second layer before it dries, so that the drops are squeezed in between the particles and are partially embedded in the second layer.

Alternatively, a manufacturing method is known for slip-proof glass tiles as described in European Patent with publication number EP937689.

These tiles can be used in glass staircase steps, and comprise at least one glass plate in which at least part of one of its faces has a greater roughness than the rest of its face.

The manufacturing method for this tile employs a glass plate with one or more spaces in its body filled with a resin containing grains of a hard material, by which the tile is made slip-proof.

The present invention simplifies the process of incorporating a slip-proof surface to a glass plate, as well as providing the advantage of allowing a simple configuration of even complex patterns on the slip-proof area.

### DESCRIPTION OF THE INVENTION

The present invention relates to a method for manufacturing a steppable slip-proof glass plate and to the plate obtained thereby.

The manufacturing method allows producing a glass plate with a slip-proof surface on a number of areas or on its entire surface.

These areas can configure a pattern that can improve the appearance of the finished product or can even incorporate icons or representations conveying information.

This information may be arrows indicating a direction and sense, converging lines to help guide the flow of people, or other elements according to the conditions of the place of installation.

This glass plate does not have to be the plate that is directly installed on the area of transit to be provided with a slip-proof steppable glass floor, but can instead be an external plate of a thicker layered glass.

After determining the design to be applied on the slip-proof area of the glass plate, this design is configured on a silkscreen.

This silkscreen is used to mark the glass plate with vitrifiable enamel that will act as an adhesive, so that the enamel deposited on the surface of the glass will show the pattern of the silkscreen.

Before the enamel dries, abrasive particles are deposited that adhere to the enamel.

The area that is not covered by the enamel will not provide any support for the abrasive particles deposited.

These adhesive particles are preferably glass particles giving a shaded appearance to the slip-proof surface.

When the abrasive particles have adhered a drying process is performed, after which the plate is introduced in an oven above 600°C, so that the enamel will vitrify.

During the vitrification a molecular inter-diffusion has been favoured between the glass plate and the abrasive particles, so that the latter are completely integrated in the plate, thereby preventing them from being detached with use so that the surface would lose its slip-proof properties.

At the oven outlet a controlled-rate cooling provides the tempering that confers the suitable final properties, so that the slip-proof plate obtained has the required mechanical properties.

After this the plate can be used to form layered glass plates with a greater thickness, as long as the slip-proof surface is the outer surface.

### DESCRIPTION OF THE DRAWINGS

The present description is complemented by a set of drawings meant to illustrate the preferred example of the invention and not limiting the invention in any way.

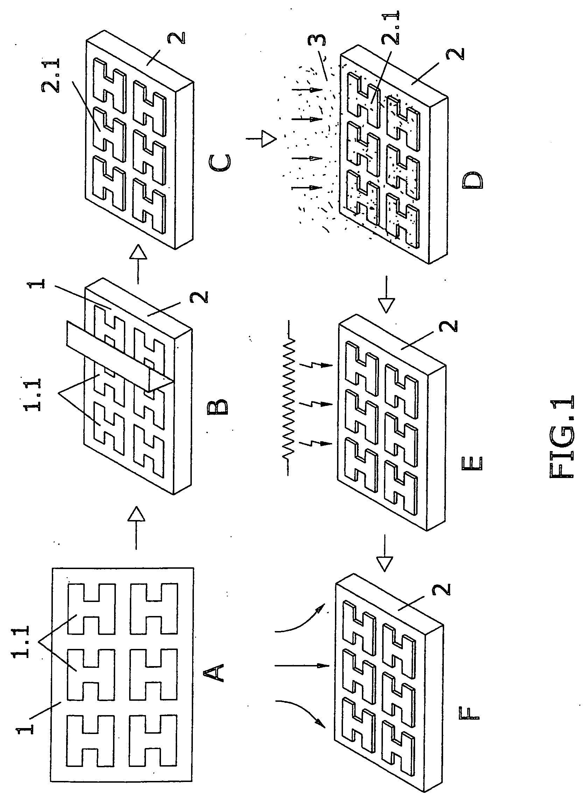

Figure 1 is a schematic representation of the manufacturing process for the slip-proof glass plate.

### PREFERRED EMBODIMENT OF THE INVENTION

In view of the above, the present invention consists of a method for manufacturing a steppable slip-proof glass plate and to the plate obtained thereby.

Figure 1 shows a schematic representation of the various stages comprising the manufacture of the steppable, slip-proof glass plate (2).

Each of these stages is ordered as shown by the arrows between them, and is identified by the first letters of the alphabet in capital letters.

In a first stage, labelled A, a silkscreen (1) is created with the pattern (1.1) to be represented on the glass plate (2) corresponding with the slip-proof surface.

The same figure shows a second stage B that consists of a conventional silk-marking process in which vitrifiable enamel is used instead of ink.

In stage C, after the silk marking the image (1.1) of the screen is represented (2.1) on the enamel layer applied on the glass plate (2).

In stage D, abrasive particles (3) are applied on the plate (2) with the image (2.1) on the enamel that is not dry yet, so that they are fixed on it.

The abrasive particles (3) falling on the surface without enamel are not retained and thus do not become part of the slip-proof surface.

Afterwards, in stage E, the plate (2) is subjected to temperatures above 600°C, so that the glass particles (3) and the enamel are vitrified, after which the particles (3) are integrated in the base glass plate (2).

The last stage, labelled F, consists of a tempering obtained by controlling the cooling rate according to the type of glass used, modelled by its performance curves.

The glass plate (2) thus obtained has a slip-proof surface with the pattern (1.1) initially configured on the silkscreen (1).

The essence of this invention is not affected by variations of the materials, shape, size and arrangement of the component elements, described in a non-limiting manner, so that an expert in the field should be able to reproduce it.

## Claims

1. Manufacturing method for a steppable, slip-proof glass plate **characterised in that** the slip-proof surface configures a specific pattern (1.1) that is previously incorporated in a silkscreen (1) with which the image is transferred to a glass plate (2) by applying vitrifiable enamel as an adhesive (2.1), on the image (2.1) reproduced in the enamel being applied a layer of abrasive particles (3), preferably of glass, that are fixed by the enamel; then the plate (2) is subjected to a temperature not under 600°C until the vitrification and fixation of the enamel and the abrasive particles (3) on the plate (2), then tempering the plate (2) by a controlled-rate cooling.

2. Manufacturing method for a steppable, slip-proof glass plate according to claim 1, **characterised in that** the area covered by the enamel applied by silk marking on the plate (2) is all of one of its faces.

3. Steppable, slip-proof glass plate according to previous claims, **characterised in that** the glass plate (2) obtained by the method of silk marking, incorporation of abrasive particles (3) and later vitrification and tempering, is placed on top of a number of plates with its slip-proof surface external until determining a volume that provides a suitable thickness and strength of the assembly.

4. Steppable, slip-proof glass plate according to previous claims, **characterised in that** the pattern (1.1) of the slip-proof surface corresponds to converging lines, arrows or icons providing information to direct people in the transit areas where it is meant to be installed.
